Europäisches Patentamt

European Patent Office

Office européen des brevets

(19)

(11) Veröffentlichungsnummer: **0 264 590 B1**

(12) # EUROPÄISCHE PATENTSCHRIFT

(45) Veröffentlichungstag der Patentschrift: 07.08.91

(51) Int. Cl.⁵: **C08F 220/14**

(21) Anmeldenummer: 87112604.1

(22) Anmeldetag: 29.08.87

(54) **Herstellung eines Methylmethacrylat-Copolymerisats.**

(30) Priorität: **19.09.86 DE 3631826**

(43) Veröffentlichungstag der Anmeldung:
**27.04.88 Patentblatt 88/17**

(45) Bekanntmachung des Hinweises auf die
Patenterteilung:
**07.08.91 Patentblatt 91/32**

(84) Benannte Vertragsstaaten:
**DE FR GB IT NL**

(56) Entgegenhaltungen:
**US-A- 3 252 950**

**CHEMICAL ABSTRACTS, Band 102, Nr. 18,
Mai 1985; Zusammenfassung Nr. 150317x,
Columbus, Ohio, US**

(73) Patentinhaber: **Röhm GmbH
Kirschenallee Postfach 4242
W-6100 Darmstadt 1(DE)**

(72) Erfinder: **Albrecht, Klaus, Dr.
Vogelsbergstrasse 20
W-6500 Mainz 42(DE)**

**Beschreibung**

Die Erfindung betrifft ein verbessertes Verfahren zur Herstellung einer Formmasse aus Methylmethacrylat, einem Vinylaromaten und Maleinsäureanhydrid, insbesondere in kontinuierlicher Betriebsweise. Formmassen auf dieser Basis zeichnen sich gegenüber Polymethylmethacrylat-Formmassen durch eine höhere Wärmeformbeständigkeit und geringere Spannungsrißanfälligkeit aus.

Stand der Technik

Aus der DE-AS 1 231 013 ist es bekannt, aus den oben genannten Monomeren eine Formmasse herzustellen, die kochfest ist und sich durch eine geringe Rißbildungsneigung bei wechselnder Beanspruchung durch heißes und kaltes Wasser auszeichnet. Die Polymerisation erfolgt absatzweise in Substanz, was für die technische Herstellung dieser Formmasse wenig zweckmäßig ist.

Eine ähnliche Formmasse ist aus der DE-A-1 298 272 bekannt; sie wird ebenfalls durch Polymerisation in Substanz erzeugt. Auch in der EP-A-113 105 wird die Herstellung einer solchen Formmasse durch Polymerisation in Substanz beschrieben. Alternativ wird die Perlpolymerisation eines teilweise polymerisierten Monomerengemisches in wäßriger Phase vorgeschlagen, was jedoch wegen der Hydrolyseempfindlichkeit des Maleinsäureanhydrids nachteilig ist.

Gemäß JP-A 85/147 417 wird ein Monomerengemisch aus Methylmethacrylat, einem Vinylaromaten und Maleinsäureanhydrid in einem organischen Lösungsmittel gelöst und bei Temperaturen zwischen 100 und 180 Grad C zu 40 bis 70 % polymerisiert. Aus der Polymerisatlösung wird die Formmasse durch Verdampfen des Lösungsmittels und der restlichen Monomeren gewonnen. Die erhaltene Formmasse hat eine unerwünscht niedrige reduzierte Viskosität, einen verhältnismäßig hohen Restgehalt an nicht polymerisiertem Maleinsäureanhydrid und einen störenden Gelbstich.

Aus der US-A 3 252 950 ist es bekannt, ein im wesentlichen aus Methylmethacrylat bestehendes Monomerengemisch, das in einem organischen Lösungsmittel gelöst ist, in einer ersten Stufe in einem Rührkessel teilweise zu polymerisieren und den erhaltenen Polymerisatsirup in einer zweiten Stufe im wesentlichen ohne Rückvermischung vollständig zu polymerisieren. Anschließend wird das Lösungsmittel aus der erhaltenen hochviskosen Polymerisatlösung verdampft.

**Aufgabe und Lösung**

Der Erfindung liegt die Aufgabe zugrunde, ein Verfahren zur Herstellung einer Formmasse aus einem Monomerengemisch aus:

$$60 \quad - \ 90 \ \text{Gew.-\% Methylmethacrylat,}$$

$$5 \quad - \ 25 \ \text{Gew.-\% wenigstens eines Vinylaromaten,}$$

$$2,5 \ - \ 15 \ \text{Gew.-\% Maleinsäureanhydrid und}$$

$$0 \quad - \quad 5 \ \text{Gew.-\% eines Alkylacrylats,}$$

durch radikalische Polymerisation in Anwesenheit eines nicht polymerisierbaren organischen Lösungsmittels, zu finden, bei dem das Polymerisationsgemisch bis zum Abschluß der Polymerisation in einem fließfähigen Zustand bleibt und die Mängel der bekannten Verfahren, wie eine zu niedrige reduzierte Viskosität, hoher Restmonomergehalt und Verfärbung, vermieden werden. Die Polymerisation wird im Temperaturbereich von 75 - 150 Grad C durchgeführt und die flüchtigen Bestandteile anschließend verdampft.

Die Aufgabe wird erfindungsgemäß dadurch gelöst, daß erst nach einem Umsatz von 35 bis 60 Gew.-% ein organisches Lösungsmittel zugesetzt wird und die Polymerisation mindestens ab einem Umsatz von 50 Gew.-% im Temperaturbereich von 75 - 150 Grad C oder - falls als Vinylaromat alpha-Methylstyrol eingesetzt wird - bis 130 Grad C bis zu einem Umsatz von mindestens 80 Gew.-% fortgesetzt wird.

Durch das Verfahren der Erfindung wird eine unverfärbte Formmasse mit einer reduzierten Viskosität im Bereich von 50 bis 90 ml/g, vorzugsweise 60 bis 80 ml/g, erhalten. Der Restmonomergehalt liegt unter 0,6 Gew.-%. Von Bedeutung ist vor allem, daß der Gehalt an dem nachträglich schwer entfernbaren Maleinsäureanhydrid unter 0,1 Gew.-% liegt, was tolerierbar ist.

Die Uneinheitlichkeit der Copolymerisat-Zusammensetzung und des Molekulargewichts des erfindungsgemäß hergestellten Polymerisats ist niedriger als die eines Substanzpolymerisats von gleicher Zusammensetzung und gleichem Molekulargewicht (Gew.-Mittel). Sie liegt z. B. zwischen 0,8 und 1,0. In entsprechender Weise ist die Schmelzviskosität vermindert und die Verarbeitbarkeit verbessert. Dies äußert sich in einer niedrigeren Verarbeitungstemperatur und besseren mechanischen Eigenschaften.

Ausführung der Erfindung

Polymerisationsgemisch bis zu einem Umsatz von 60 Gew.-% ohnehin fließfähig bleibt, wird erst in der zweiten Stufe Lösungsmittel zugegeben. Seine Menge sollte so bemessen werden, daß das Reaktionsgemisch beim Erreichen des Endumsatzes bei der Polymerisationstemperatur noch fließfähig ist. Dazu ist ein Lösungsmittelgehalt zwischen 20 und 50 %, beispielsweise 25 bis 40 %, jeweils auf das Gewicht des Polymerisationsgemisches bezogen, ausreichend.

Es ist vorteilhaft, wenn das Lösungsmittel einen Siedepunkt hat, der unter demjenigen des Monomerengemisches liegt. Vorzugsweise liegt der Siedepunkt bei Normaldruck im Bereich von 80 bis 150 Grad C. In der Praxis verwendet man billige, nicht-toxische Lösungsmittel, die unter den Verfahrensbedingungen weitgehend inert sind und eine niedrige Übertragungskonstante haben. Als Beispiele seien einkernige Aromaten, wie Benzol, Toluol oder Xylol, und aliphatische Ester, wie Methyl-, Äthyl-, Propyl- oder Butylacetat, -propionat oder -butyrat, aliphatische Ketone, wie Methyläthylketon oder Pentanon-3, genannt. Bevorzugt sind Ester mit nicht mehr als 8 C-Atomen. Das Monomerengemisch besteht zu 60 bis 90 % aus Methylmethacrylat. Alkylacrylate mit bis zu 6, vorzugsweise bis zu 4 C-Atomen im Alkylrest können in einem Anteil bis zu 5% zur Verbesserung der rheologischen Eigenschaften mitverwendet werden. Als Vinylaromaten kommen vor allem Styrol, p-Methylstyrol und alpha-Methylstyrol in Betracht. Styrol und p-Methylstyrol haben den Vorteil, daß sie eine schnelle Polymerisation gestatten. Dagegen muß alpha-Methylstyrol wegen seiner starken Depolymerisationsneigung bei niedrigerer Temperatur und deshalb langsamer einpolymerisiert werden. Während aber der Zusatz von Styrol die Wärmeformbeständigkeit gegenüber Polymethylmethacrylat nur um etwa 10 bis 15 Grad auf 120 bis 123 Grad C erhöht, hat die mit der gleichen Menge alpha-Methylstyrol hergestellte Masse eine noch deutlich höhere Wärmeformbeständigkeit, nämlich etwa 130 bis 135 Grad C.

Die Polymerisation wird in an sich bekannter Weise durch radikalbildende Initiatoren ausgelöst, läßt sich mit geringerer Geschwindigkeit aber auch rein thermisch ausführen. In der Regel genügt eine einmalige Initiatorzugabe vor Beginn der Polymerisation, wobei der Initiator so gewählt wird, daß bis zum Abschluß der Polymerisation eine ausreichende Radikalbildung erfolgt. Beispiele geeigneter Initiatoren sind Dilauroylperoxid, tert.-Butylperoctoat und tert.-Butylperisononanoat. Man kann jedoch auch die Polymerisation in der ersten Stufe mit einem Initiator von geringerer Halbwertzeit beginnen, beispielsweise mit tert.-Butylperneodecanoat, und vor Beginn der zweiten Stufe einen Initiator von höherer Halbwertzeit, wie 2,2-Bis-(tert.-butylperoxy)-butan, zugeben. Die Initiatormengen liegen im allgemeinen bei 0,02 bis 2 % vom Gewicht des Polymerisationsansatzes. Wenn Styrol als Vinylaromat eingesetzt wird, sollte ein Regler mitverwendet werden, wie z.B. Dodecylmercaptan. Die Reglermenge kann etwa 0,1 bis 0,5 Gew.-% betragen.

Die Polymerisationstemperatur wird mit der Art und Menge des verwendeten Initiators so abgestimmt, daß der gewünschte Endumsatz erreicht wird und das entstehende Polymerisat die gewünscht reduzierte Viskosität hat. In der Regel liegt die Polymerisationstemperatur während des gesamten Verfahrens im Bereich von 75 bis 150 Grad C. Werden in der ersten Stufe niedrigere Temperaturen angewendet, so erfolgt die Polymerisation unerwünscht langsam. Wird drucklos polymerisiert, was bevorzugt ist, so wird zweckmäßig eine Temperatur von 110 Grad C - zumindest in der ersten Stufe - nicht überschritten. Bei Mitverwendung von alpha-Methylstyrol ist es vorteilhaft, Temperaturen über 100 Grad C zu vermeiden.

In der zweiten Verfahrensstufe muß ein Umsatz der Monomeren von mindestens 80 Gew.-% erreicht werden. Vorzugsweise wird ein möglichst vollständiger Umsatz, d.h. mindestens 90 Gew.-%, insbesondere 95 bis 100 Gew.-%, angestrebt. Dadurch wird die Notwendigkeit vermieden, nach Abschluß der Polymerisation zusammen mit dem Lösungsmittel größere Mengen an unverbrauchten Monomeren abzudestillieren, was stets die Gefahr der Verfärbung bedeutet.

Für die Durchführung der ersten Verfahrensstufe eignet sich ein übliches Rührgefäß mit Heiz- und Kühlvorrichtung. Das gleiche Rührgefäß kann auch für die zweite Stufe verwendet werden, wenn das Polymerisationsgemisch in Anwesenheit einer großen Lösungsmittelmenge genügend rührfähig bleibt.

Vorzugsweise wird das Verfahren kontinuierlich durchgeführt. Dabei wird für die erste Stufe zweckmäßig ein kontinuierlich durchströmtes Rührgefäß verwendet und die Verweilzeit so eingestellt, daß ein Umsatz von 60 Gew.-% nicht überschritten wird. Vorzugsweise liegt der Umsatz in der ersten Stufe zwischen 35 und 50 Gew.-%. Vorzugsweise wird im ersten Reaktor ohne Lösungsmittel gearbeitet und dieses erst dem aus dem ersten Reaktor austretenden Polymerisationsgemisch in einem kontinuierlich durchflossenen Mischgefäß zugesetzt. Für die zweite Verfahrensstufe eignet sich ein kontinuierlich von oben nach unten durchströmter Säulenreaktor, der vorzugsweise keine Rührvorrichtung enthält. Bei der bevorzugten Betriebsweise herrschen im oberen Bereich des Säulenreaktors Siedebedingungen und die verdampfenden Anteile werden mittels eines aufgesetzten Rückflußkühlers in das Polymerisationsgemisch zurückgeleitet. Durch das Sieden wird im oberen Teil des Säulenreaktors eine Rückvermischung in dem Polymerisationsgemisch und eine effektive Wärmeabführung erreicht, die mit fortschreitendem Umsatz im unteren Teil aufhört. Um die Fließfähigkeit zu erhalten, kann die Temperatur in dem Säulenreaktor von oben nach unten in den bereits erwähnten Grenzen ansteigen. Im kontinuierlichen Betrieb wird in beiden Reaktoren durch äußere Kühlung eine gleichmäßige Temperatur aufrechterhalten.

Nach Erreichen des Endumsatzes werden das in der Polymerisatlösung enthaltene Lösungsmittel sowie eventuell noch vorhandene Restmengen an flüchtigen Monomeren verdampft. Dazu eignet sich ein Entgasungsextruder, der bei kontinuierlicher Betriebsweise an die untere Auslaßöffnung des Säulenreaktors angeschlossen wird. Dort wird die Masse in bekannter Weise mittels einer oder mehreren Schnecken durch eine oder mehrere Entspannungszonen gefördert, wo die flüchtigen Anteile bei einer Temperatur, bei der die Formmasse im schmelzflüssigen Zustand vorliegt, verdampft werden. Wenigstens eine derartige Entspannungszone sollte mit unteratmosphärischem Druck, beispielsweise 10 bis 100 mbar, betrieben werden. Die Betriebstemperatur des Entgasungsextruders steigt in der Regel vom Eintritt bis zum Austritt von etwa 220 bis 270 Grad C an. Am Austrittsende kann der schmelzflüssige Formmassenstrang abgenommen, gekühlt und granuliert oder zu einem geformten Profil verarbeitet werden.

**Beispiel 1 - Diskontinuierliche Arbeitsweise**

Ein 3 1-Rührkolben mit Rückflußkühler wird unter einer Argon-Schutzgasatmosphäre mit einer Reaktionsmischung aus 76 Gew.-%. Methylmethacrylat, 1 Gew.-%. Styrol, 15 Gew.-%. alpha-Methylstyrol, 8 Gew.-%. Maleinsäureanhydrid und 0,07 Gew.-T. Bis-(tert.butylperoxy)butan als Initiator beschickt und auf die Reaktionstemperatur von 95 °C erhitzt.

Nach 8 Stunden werden bei einem Umsatz von 45,5 Gew.-% 30 Gew.-T. Toluol zugegeben. Nach 26 Stunden ist ein Umsatz von 100 Gew.-% erreicht. Das Lösungsmittel wird in einem Schneckenverdampfer entfernt, wobei eine schmelzflüssige Formmasse mit einem Restmonomergehalt unter 0,5 Gew.-% zurückbleibt. Die reduzierte Viskosität beträgt $\eta_{sp/} C = 72$ cm$^3$/g; die Vicat-Erweichungstemperatur liegt bei 132 °C.

**Beispiel 2 - Kontinuierliche Verfahrensweise**

Eine Mischung aus 76 Gewichtsteilen (T) Methylmethacrylat, 1 T Styrol, 15 T alpha-Methylstyrol, 8 T Maleinsäureanhydrid und 0,04 T Di-tert.-Butylperoxid wird als kontinuierlicher Strom in einen beheizten Rührkessel eingeführt, wobei dessen Füllmenge mit der Zu- und Abführungsgeschwindigkeit so abgestimmt ist, daß sich eine Verweilzeit des Reaktionsgemisches von 140 min ergibt. Bei einer Polymerisationstemperatur von 100 °C stellt sich ein stationärer Umsatz von 35 bis 40 % ein. Aus dem Reaktor wird ein der Zuführung entsprechender Volumenstrom des gebildeten Polymerisatsirups kontinuierlich abgenommen. Der abgenommene Polymerisatsirup wird mit 30 T Toluol und 0,02 T des Initiators je 100 T Sirup kontinuierlich versetzt und beim Durchströmen eines statischen Mischers gleichmäßig vermischt und zur weiteren Polymerisation in den Kopf eines Rohrreaktors mit Heizmantel und aufgesetztem Rückflußkühler geleitet. Im oberen Teil des Rohrreaktors siedet das Reaktionsgemisch unter Rückfluß. Nach einer Verweilzeit von 15 Stunden wird das zu 97 % umgesetzte Reaktionsgemisch von flüchtigen Bestandteilen befreit und ergibt eine Formmasse mit einer reduzierten Viskosität $\eta$ sp /c = 66 ml/g einer Vicat-Erweichungstemperatur von 131 °C, einem Restmonomerengehalt von 0,07 % und einem Toluol-Restgehalt von 0,32 %.

**Patentansprüche**

1.  Verfahren zur Herstellung einer Formmasse aus einem Monomerengemisch aus

```
60 - 90 Gew.-% Methylmethacrylat,
 5 - 25 Gew.-% wenigstens eines Vinylaromaten,
 2,5 - 15 Gew.-% Maleinsäureanhydrid,
 0 -  5 Gew.-% eines ~~niederen~~ Alkylacrylats,
```

durch radikalische Polymerisation, wobei die Polymerisation im Temperaturbereich von 75 - 150 Grad C durchgeführt wird und anschließend die flüchtigen Bestandteile verdampft werden,

dadurch gekennzeichnet,

daß nach einem Umsatz von 35 bis 60 Gew. -% ein organisches, nicht polymerisierbares Lösungsmittel zugesetzt wird und die Polymerisation mindestens ab einem Umsatz von 50 Gew. -% im Temperaturbereich von 75 - 150 Grad C weitergeführt wird oder - falls als Vinylaromat alphaMethylstyrol eingesetzt wird - bis 130 Grad C bis zu einem Umsatz von mindestens 80 Gew. -% fortgesetzt wird.

2. Verfahren nach Anspruch 1, dadurch gekennzeichnet, daß die Polymerisation bis zu einem Umsatz von mindestens 90, insbesondere 95 bis 100 Gew. -% fortgeführt wird.

3. Verfahren nach den Ansprüchen 1 und 2, dadurch gekennzeichnet, daß eine solche Menge des organischen Lösungsmittels verwendet wird, daß das Reaktionsgemisch beim Erreichen des Endumsatzes bei der Polymerisationstemperatur noch fließfähig ist.

4. Verfahren nach Anspruch 3, dadurch gekennzeichnet, daß das organische Lösungsmittel in einer Menge von 20 bis 50 %, bezogen auf das Gewicht des Reaktionsgemisches, eingesetzt wird.

5. Verfahren nach den Ansprüchen 1 bis 4, dadurch gekennzeichnet, daß ein organisches Lösungsmittel mit einem Siedepunkt zwischen 80 und 150 Grad C eingesetzt wird.

6. Verfahren nach Anspruch 5, dadurch gekennzeichnet, daß aliphatische Ester, oder Ketone, oder Aromaten als Lösungsmittel eingesetzt werden.

7. Verfahren nach den Ansprüchen 1 bis 6, dadurch gekennzeichnet, daß das Verfahren kontinuierlich durchgeführt wird.

8. Verfahren nach Anspruch 7, dadurch gekennzeichnet, daß es in zwei Stufen durchgeführt wird, wobei für die erste Verfahrensstufe ein Rührgefäß und für die zweite Verfahrensstufe ein Rohrreaktor eingesetzt wird.

9. Verfahren nach Anspruch 8, dadurch gekennzeichnet, daß ein senkrecht stehender Rohrreaktor ohne Rührwerk eingesetzt und im oberen Teil unter Siedebedingungen des Reaktionsgemisches betrieben wird.

10. Verfahren gemäß Anspruch 1, dadurch gekennzeichnet, daß als Initiator 2,2-Bis-(tert.butylperoxybutan) eingesetzt wird.

**Claims**

1. Process for preparing a moulding composition from a monomer mixture comprising

60-90% by weight of methylmethacrylate,

5-25% by weight of at least one vinyl aromatic compound,

2.5-15% by weight of maleic anhydride,

0-5% by weight of an alkyl acrylate,

by radial polymerisation, the polymerisation being carried out at a temperature in the range from 75-150°C and the volatile components subsequently being evaporated off, characterised in that after a conversion of 35-60% by weight an organic, non-polymerisable solvent is added and the polymerisation is continued at least from a conversion of 50% by weight upwards, in a temperature range from 75-150°C, or - if alpha-methyl styrene is used as the vinyl aromatic compound - up to 130 °c up to a conversion of at least 80% by weight.

2. Process according to claim 1, characterised in that the polymerisation is continued up to a conversation of at least 90, preferably 95-100% by weight.

3. Process according to claims 1 and 2, characterised in that the quantity of organic solvent used is such that the reaction mixture is still fluid at the polymerisation temperature when the final conversation is achieved.

4. Process according to claim 3, characterised in that the organic solvent is used in a quantity of 20-50%, based on the weight of the reaction mixture.

5. Process according to claims 1 to 4, characterised in that an organic solvent having a boiling point between 80 and 150°C is used.

6. Process according to claim 5, characterised in that aliphatic esters or ketones or aromatic compounds are used as solvent.

7. Process according to claims 1 to 6, characterised in that the process is carried out continuously.

8. Process according to claim 7, characterised in that it is carried out in two stages, using a stirred vessel for the first stage of the process and a tube reactor for the second stage of the process.

9. Process according to claim 8, characterised in that a vertically positioned tube reactor without a stirrer is used and is operated in the upper part under the boiling conditions of the reaction mixture.

10. Process according to claim 1, characterised in that 2,2,-bis-(tert.butylperoxybutane) is used as initator.

**Revendications**

1. Procédé de préparation d'une masse à mouler à partir d'un mélange de monomères composé de

60 - 90% en poids de méthacrylate de méthyle,

5 - 25% en poids d'au moins un carbure vinylaromatique,

2,5 - 15% en poids d'anhydride maléique,

0 - 5% en poids d'un acrylate d'alkyle,

par polymérisation radicalaire, la polymérisation étant conduite dans la gamme de température de 75 à 150°C. puis les constituants volatils étant évaporés, caractérisé en ce qu'après un degré de transformation de 35 à 60% en poids, un solvant organique non polymérisable est ajouté et la polymérisation est poursuivie, au moins à partir d'un degré de transformation de 50% en poids, dans la gamme de température de 75 - 150° C ou - en cas d'utilisation d'∝-méthylstyrène comme carbure vinylaromatique - elle est poursuivie jusqu'à 130° C, jusqu'à un degré de transformation d'au moins 80% en poids.

2. Procédé selon la revendication 1, caractérisé en ce que la polymérisation est poursuivie jusqu'à un degré de transformation d'au moins 90%, en particulier de 95 à 100% en poids.

3. Procédé selon la revendication 1 ou 2, caractérisé en ce qu'on utilise une quantité du solvant organique telle que le mélange réactionnel soit encore fluide à la température de polymérisation lorsqu'il a atteint le degré de transformation final.

4. Procédé selon la revendication 3, caractérisé en ce que le solvant organique est utilisé dans une quantité de 20 à 50% par rapport au poids du mélange réactionnel.

5. Procédé selon l'une quelconque des revendications 1 à 4, caractérisé en ce qu'on utilise un solvant organique ayant un point d'ébullition compris entre 80 et 150° C.

6. Procédé selon la revendication 5, caractérisé en ce qu'on utilise comme solvants des esters aliphatiques, des cétones ou des carbures aromatiques.

7. Procédé selon l'une quelconque des revendications 1 à 6, caractérisé en ce que le procédé est exécuté en continu.

8. Procédé selon la revendication 7, caractérisé en ce qu'il est exécuté en deux étapes, un récipient muni d'un agitateur étant utilisé pour la première étape du procédé et un réacteur tubulaire étant utilisé pour la seconde étape du procédé.

9. Procédé selon la revendication 8, caractérisé en ce qu'on utilise un réacteur tubulaire sans agitateur, qui est exploité dans les conditions d'ébullition du mélange réactionnel dans sa partie supérieure.

10. Procédé selon la revendication 1, caractérisé en ce qu'on utilise du 2,2-bis-(tert.-butylperoxybutane) comme initiateur.